# EUROPÄISCHE PATENTSCHRIFT

(11) **EP 2 285 641 B1**
(45) Veröffentlichungstag und Bekanntmachung des Hinweises auf die Patenterteilung: **26.12.2012**
(21) Anmeldenummer: 09737906.9
(22) Anmeldetag: 27.04.2009
(51) Int. Cl.: B62D 5/04, H02P 29/02

(54) **VORRICHTUNG UND VERFAHREN ZUM BETRIEB EINER TECHNISCHEN EINRICHTUNG, MIT EINER ELEKTRISCHEN ANTRIEBSMASCHINE**
DEVICE AND METHOD FOR OPERATING A TECHNICAL UNIT, COMPRISING AN ELECTRIC DRIVE MACHINE
DISPOSITIF ET PROCÉDÉ PERMETTANT DE FAIRE FONCTIONNER UN ENSEMBLE TECHNIQUE COMPRENANT UNE MACHINE D'ENTRAÎNEMENT ÉLECTRIQUE

(30) Priorität: 02.05.2008 DE 102008021854
(43) Veröffentlichungstag der Anmeldung: 23.02.2011
(73) Patentinhaber: Volkswagen Aktiengesellschaft, 38440 Wolfsburg (DE)
(72) Erfinder: BUSSE, Carsten, 38444 Wolfsburg (DE); MILARK, Andreas, 38448 Wolfsburg (DE); JABLONSKI, Thorsten, 31241 Ilsede (DE); DENKMANN, Hartmut, 38302 Wolfenbüttel (DE); SCHÖTTLER, Frank, 38102 Braunschweig (DE)
(86) Internationale Anmeldenummer: PCT/EP2009/003354
(87) Internationale Veröffentlichungsnummer: WO 2009/132862

(56) Entgegenhaltungen:
- WO-A-03/099632
- DE-A1-102005 015 783

## Beschreibung

Die Erfindung betrifft eine Vorrichtung und ein Verfahren zum Betrieb einer technischen Einrichtung, mit einer elektrischen Antriebsmaschine, insbesondere eines Servo-Lenksystems.

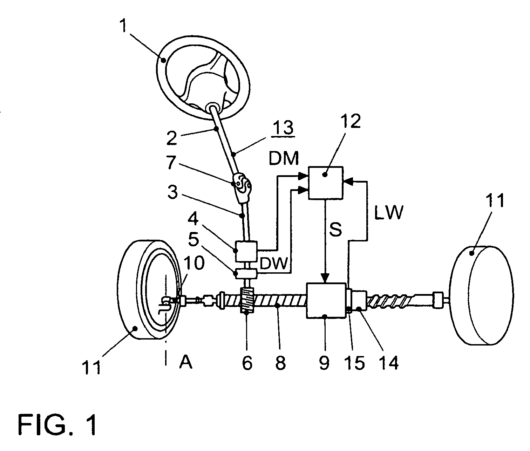

Derartige Lenksysteme umfassen gewöhnlich einen Regelkreis, dessen Regelgröße zumindest von dem Lenkradmoment abhängig ist. Die in einem Steuergerät gespeicherten Vorgabefunktionen dienen dem Berechnen des Sollwerts des unterstützenden Moments in Abhängigkeit von Eingangsgrößen des Steuergerätes, insbesondere des Lenkradmomentes. WO-A-03/099632 offenbart eine Vorrichtung nach dem Oberbegriff des Anspruchs 1 sowie ein Verfahren nach dem Oberbegriff des Anspruchs 11. In Fig. 1 ist der übliche Aufbau eines elektromechanisch arbeitenden Servo-Lenksystems eines Kraftfahrzeugs dargestellt, welches ein Lenkrad 1 aufweist, das über einen ersten Abschnitt 2 einer Lenkstange 13, mittels eines oder mehrerer Kreuzgelenke 7 fest mit einem zweiten Abschnitt 3 der Lenkstange verbunden ist. Die Lenkstange 13 überträgt das von dem Fahrer des Kraftwagens auf das Lenkrad 1 aufgebrachten Moment auf ein Ritzel 6, das in eine Zahnstange 8 eingreift, die horizontal zur Achse des Fahrzeuges zwischen zwei gelenkten Rädern 11 angeordnet ist. Das Ritzel 6 kann auch durch ein beliebiges anderes Übertragungsmittel gebildet sein, zum Beispiel eine Schneckenwelle. Jedes gelenkte Rad 11 ist in der Lage, sich bei einer linearen Bewegung der Zahnstange 8 um eine vertikale Drehachse A zu drehen, wobei das gelenkte Rad 11 über die Zahnstange 8 von einem Gestänge 10 angetrieben wird.

Das Servo-Lenksystem besitzt ferner eine Servo-Steuerung, die dazu dient, auf die Zahnstange 8 eine Kraft auszuüben, die in der gleichen Richtung wirkt wie die Kraft des Ritzels 6, wodurch dem Fahrer des Fahrzeugs das Drehen des Lenkrads 1 erleichtert wird. Die Servo-Steuerung umfasst einen Servomotor 9 als elektrische Antriebsmaschine, dessen Ausgangsmoment von einem elektronischen Steuergerät 12 gesteuert wird, welches ein Sollwertsignal S des Hilfsmomentes an den Servomotor 9 liefert. Das Ausgangsmoment des Servomotors 9 wird mittels einer nicht dargestellten Antriebswelle des Servomotors 9 auf die Zahnstange 8 und damit die Räder 11 übertragen. Wegen der erheblichen zu übertragenden Kräfte wirkt die Antriebswelle des Servomotors 9 in der Regel über ein nicht näher dargestelltes Kugelgetriebe 14 auf die Zahnstange 8.

Die Abtriebswelle des Servomotors 9 ist somit über das Kugelgetriebe 14, die Zahnstange 8 und das Ritzel 6 mechanisch mit der Lenkstange 13 verbunden. Die mechanische Verbindung zwischen der Abtriebswelle und der Lenkstange 13 kann aber auch die direkt erfolgen, indem die Abtriebswelle an der Lenkstange 13 über ein geeignetes Getriebe direkt angreift. Die Abtriebswelle des Servo-Motors 9 unterstützt dabei den Lenkeinschlag des Lenkrads 1, indem sie mittels der vorstehend genannten mechanischen Einrichtungen auf die Lenkstange 13 ein Hilfsmoment ausübt, das direkt von dem Ausgangsmoment des Servo-Motors 9 und folglich von dem Sollwertsignal S des Hilfemoments abhängt.

Das Steuergerät 12 ist in der Regel derart aufgebaut, dass es aufgrund der ankommenden Eingangsignale, z. B. des Drehmomentes DM von einem Drehmomentsensor 4 und/oder des Drehwinkels DW von einem Lenkwinkelsensor 5 die Höhe des durch den Servo-Motor 9 auszuübenden Hilfsmomentes berechnet und den entsprechenden Sollwert S an den Servomotor 9 ausgibt. Mit Hilfe geeigneter, in dem Steuergerät 12 gespeicherter Tabellen wird dabei das Hilfsmoment in der Regel derart bestimmt, dass in Abhängigkeit von der errechneten Differenz des Drehwinkels DW und einem von einem Lenkwinkelsensor 15 gemessenen Lenkwinkel LW der Räder 11 ein von dem Servo-Motor 9 aufzubringendes Hilfsmoment bestimmt wird. Dieses Hilfsmoment ist derart groß gewählt, dass hinsichtlich des insgesamt zur Betätigung der Räder 11 aufzubringenden Momentes am Lenkrad 1 Restmoment übrig bleibt, welches von dem Fahrer gut beherrschbar ist. Damit wird in der Regel das Hilfsmoment auch von Größen abhängen, die Einfluss auf das Lenkmoment der Räder 11 besitzen, wie beispielsweise Drehwinkel-Geschwindigkeit, Temperatur, Fahrzustand des Fahrzeugs, Straßenverhältnisse und so weiter.

Es sind weiterhin Sonderformen elektromechanisch arbeitender Servo-Lenksysteme bekannt geworden, bei denen die mechanische Verbindung zwischen Lenkrad 1 und Zahnstange 8 aufgetrennt ist. Bei diesen so genannten steer-by wire-Lenksystemen müssen die von dem Lenkrad 1 auf die Zahnstange 8 aufzubringenden Kräfte und Momente durch entsprechende elektrisch arbeitende Geräte nachgebildet werden, die weiter oben geschilderten grundsätzlichen Prinzipien bleiben dabei allerdings erhalten.

Lenksysteme sind ähnlich wie Bremsanlagen Sicherheitsaggregate, die unter keinen Umständen versagen dürfen, da die Folgen eines Versagens ungleich gravierender sein können als der Ausfall anderer für ein Kraftfahrzeug ebenfalls elementarer Aggregate. Bei derartigen Sicherheitsaggregaten müssen somit besondere Maßnahmen getroffen werden, die die Wahrscheinlichkeit eines Ausfalls derartige Aggregate auf ein vertretbares Minimum herabsetzen.

Hierzu werden an sich bekannte Strategien eingesetzt, wie die Verdoppelung oder noch höhere Vervielfachung relevanter Baugruppen dieser Aggregate, um bei Ausfall einer Baugruppe auf eine andere umschalten zu können. Um feststellen zu können, ob die Baugruppe beziehungsweise die Baugruppen korrekt arbeiten, können mehrere gleichartige Baugruppen unabhängig voneinander parallel arbeiten und durch Vergleich ihrer Arbeitsergebnisse auf Übereinstimmung kann auf die korrekte Arbeitsweise dieser Baugruppen geschlossen werden.

Die beschriebenen Anforderungen an die Sicherheit gelten insbesondere für durch elektrische Hilfskraft unterstützte Servo-Lenksysteme, die mit elektrischen Steuerungen und Regelkreisen sowie elektrisch wirkenden Sensoren arbeiten. Derartige elektrische Schaltkreise arbeiten zwar verschleißfrei können aber durch Beschädigung oder Alterung von Bauelementen gleichwohl ausfallen. Während sich aber der Ausfall mechanischer Baugruppen vielfach vorher durch leicht erkennbare Anzeichen (Klappern, Ölverlust und so weiter) ankündigt und der entstandene Schaden offensichtlich ist, fallen elektrische Bauteile oft unvorhersehbar aus und der Schaden ist nur mittelbar zu erkennen. Diese Tatsache ist umso gravierender als Servo-Lenksysteme die Aufgabe haben, schwere Fahrzeuge überhaupt erst lenkbar zu machen.

Die oben beschriebenen Sicherheitsstrategien sind allerdings nur bedingt anwendbar. In vielen Fällen können aus Kostengründen, Gründen des fehlenden Bauraumes oder des nicht zu vertretenden Gewichtes Baugruppen nicht mehrfach und zueinander parallel arbeitend eingesetzt werden. Dies ist beispielsweise hinsichtlich der vergleichsweise schweren, teueren und erheblichen Bauraum nutzenden Antriebsmaschinen von Servo-Lenksystemen der Fall. Die in der Regel verwendeten Servo-Motoren sind Drehstrommotoren mit drei Phasen, wobei die meist sternförmig geschalteten drei Wicklungen ein umlaufendes Drehfeld erzeugen, welches den Rotor des Motors mitnimmt. Bei all den vielen Vorteilen, die derartige Motoren haben besitzen sie gleichwohl den Nachteil, dass durch Fehler in der beziehungsweise den Wicklungen der Motor nicht nur einfach wirkungslos bleibt sondern zusätzlich noch ein Bremsmoment aufbaut, welches die Betätigung der Lenkung durch den Fahrer nicht nur nicht unterstützen sondern sogar noch erheblich behindern kann.

Es hat daher Überlegungen gegeben, wie zu verfahren ist, wenn ein Fehler in einer Wicklung auftritt. Hierzu ist es Stand der Technik, die Wicklungen des Servo-Motors sternförmig zu schalten und die an sich über den Nullpunkt miteinander verbundenen Wicklungen über ein Sternpunktrelais miteinander zu verbinden. Wird nun ein Fehler in einer der drei Wicklungen festgestellt, so wird das Sternpunktrelais geöffnet und somit die Enden der drei miteinander zu verbindenden Wicklungen aufgetrennt. Damit werden alle Wicklungen schlagartig stromlos geschaltet und der Antriebsmotor ist, abgesehen von seiner mechanischen Reibung, wirkungslos. Auf diese Weise lässt sich sicher verhindern, dass der Motor, von seiner mechanischen Trägheit und Reibung wiederum abgesehen, der durch den Fahrer aufgebrachten Kraft entgegenwirken kann. Es bleibt selbstverständlich der Nachteil, dass bei einem Fehler auch nur in einer Wicklung, die Unterstützung durch Hilfskraft bei einer Servolenkung schlagartig abgeschaltet wird.

Aus der DE 10 2005 015 783 A1 ist eine Vorrichtung zum Betrieb einer elektrischen Antriebsmaschine bekannt, umfassend eine elektrische Antriebsmaschine, die mindestens zwei Wicklungen aufweist, welche zur Bereitstellung eines Drehmoments mit einer Spannung beaufschlagbar sind, wobei die Spannung mindestens zwei unterschiedliche Spannungsphasen aufweist, die den Wicklungen zur Erzeugung eines Drehfeldes jeweils zuordenbar sind, und eine Steuereinheit zur Ansteuerung der elektrischen Antriebsmaschine, wobei die Wicklungen der elektrischen Antriebsmaschine galvanisch entkoppelt und durch die Steuereinheit getrennt voneinander ansteuerbar sind und die Steuereinheit so konfiguriert ist, dass die zum Erzeugen eines Drehfeldes erforderlichen Spannungsphasen generierbar und getrennt voneinander an die ihnen jeweils zugeordnete Wicklung zu deren Ansteuerung weiterleitbar sind.

Der Erfindung liegt das technische Problem zugrunde, eine Vorrichtung und ein Verfahren zum Betrieb einer technischen Einrichtung, mit einer elektrischen Antriebsmaschine, die mindestens drei Wicklungen aufweist, zu schaffen, die eine verbesserte Unterstützung des Fahrers bei Fehlern gewährleistet.

Die Lösung des technischen Problems ergibt sich durch die Gegenstände mit den Merkmalen der Ansprüche 1 und 11. Weitere vorteilhafte Ausgestaltungen der Erfindung ergeben sich aus den Unteransprüchen.

Die Vorrichtung zum Betrieb einer technischen Einrichtung, mit einer elektrischen Antriebsmaschine, die mindestens drei Wicklungen aufweist, welche zur Bereitstellung eines Drehmoments mit einem Strom beaufschlagbar sind, wobei der Strom unterschiedliche Strom-Phasen für die Wicklungen aufweist, die den Wicklungen zur Erzeugung eines Drehfeldes jeweils zuordenbar sind, und einer Steuereinheit zur Ansteuerung der elektrischen Antriebsmaschine, wobei die Wicklungen zueinander sternförmig angeordnet sind und die dem Sternpunkt zugeordneten Enden der Wicklungen über ein Sternpunktrelais miteinander verbunden sind, umfasst eine mit den Wicklungen verbundene Diagnoseeinheit, die die elektrische Antriebsmaschine und/oder die Steuereinheit daraufhin überwacht, dass mindestens zwei der Wicklungen der Antriebsmaschine fehlerfrei arbeiten und die nach Feststellung von weniger als zwei fehlerfrei arbeitenden Wicklungen das Sternpunktrelais auftrennt.

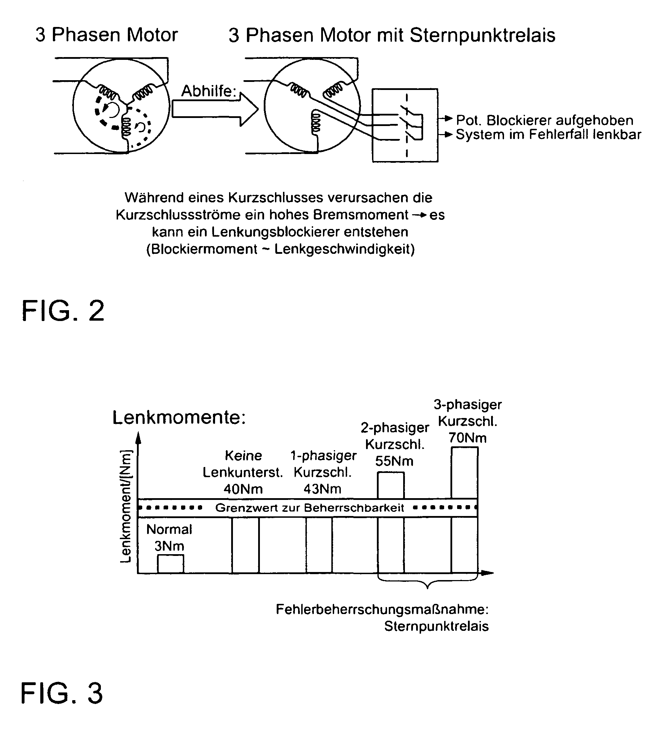

Die Vorteile einer derartigen Maßnahme beruhen auf folgenden Erkenntnissen. Gemäß dem Stand der Technik wurde das Sternpunktrelais regelmäßig aufgetrennt, wenn ein Fehler in zumindest einer Wicklung des Drehstrommotors festgestellt wurde. Damit wurden sämtliche Wicklungen des Motors schlagartig aufgetrennt und von der Stromversorgung abgeschnitten. Im Effekt bedeutete dies, dass der Motor, abgesehen von seiner Trägheit und Reibung quasi wirkungslos wurde. Diese übliche Vorgehensweise ist in Figur 2 symbolisch dargestellt.

Wie im Zusammenhang mit Figur 3 erläutert, haben nun neuere Untersuchungen folgendes ergeben. Das üblicherweise mit Servo-Unterstützung aufzubringende Drehmoment liegt bei 3 Nm (Newtonmeter). Öffnet man das Sternpunktrelais gemäß Figur 2, so liegt das von dem Fahrer über das Lenkrad aufzubringende Drehmoment bei circa 40 Nm. Das höchste von dem Fahrer aufzubringende Drehmoment bei einer einzigen defekten Wicklung des Motors liegt etwa bei 43 Nm. Der Unterschied des Drehmomentes bei aufgetrenntem Sternpunktrelais und dem ungünstigsten Fall eines Schadens an einer Motor-Wicklung ist somit vergleichsweise gering. Für den Fahrer bedeuten natürlich beide Zustände, dass er für die Lenkung des Fahrzeugs eine erhebliche Kraft aufbringen muss.

Figur 3 belegt weiter, dass bei zwei und drei schadhaften Wicklungen eines Drehstrommotors mit drei Wicklungen, die von dem Fahrer aufzubringenden Kräfte erheblich anwachsen können, sodass eine sichere Lenkung des Fahrzeugs nicht mehr unter allen Umständen gewährleistet ist. In diesem Fall ist das Auftrennen des Sternpunktrelais sinnvoll.

Im Falle einer Antriebsmaschine mit drei Wicklungen findet also bei einphasigen Fehlern keine Trennung der fehlerhaften Phase statt. Bei m Wicklungen, mit m > 3, gilt dies ebenfalls, solange nur mindestens zwei Wicklungen fehlerfrei arbeiten.

In einer bevorzugten Ausführungsform passt die Diagnoseeinheit oder die Steuereinheit nach Feststellung von noch mindestens zwei fehlerfrei arbeitenden Wicklungen und mindestens einer fehlerhaften Wicklung die Höhe und/oder die Phase der den fehlerfreien Wicklungen zugeführten Ströme derart an, dass diese bei geschlossenem Sternpunktrelais über die Arbeitsmaschine eine optimale Leistung bzw. ein unterstützendes Hilfselement zur Verfügung stellen. Es erfolgt also eine Kompensation des Fehlerstroms durch bestimmte Änderung der Ansteuerung der verbleibenden fehlerfreien Phasen bzw. Wicklungen, was einer geänderten Motorkommutierung entspricht. Somit kann dem Fahrer wieder eine Hilfskraft bzw. ein Hilfsmoment zur Verfügung gestellt werden.

In einer weiteren bevorzugten Ausführungsform klassifiziert die Diagnoseeinheit bei Feststellung von zwei ordnungsgemäß arbeitenden Wicklungen den Fehler der fehlerhaften Wicklung und in Abhängigkeit von der Klassifizierung des Fehlers wird die Höhe und/oder die Phase der Ströme für die fehlerfrei arbeitenden Wicklungen geändert. Vorzugsweise wird eine fehlerhafte Wicklung daraufhin klassifiziert, ob diese einen einphasigen Motorphasenkurzschluss, eine Unterbrechung der Motorphase, einen Wicklungskurzschluss innerhalb der Motorphase, einen einphasigen Masseschluss, einen einphasigen Kurzschluss gegen die Versorgungsspannung oder einen offenen Kontakt zum Sternpunktrelais besitzt.

In einer bevorzugten Ausführungsform ist die technische Einrichtung als elektromechanische Servolenkung ausgebildet.

Obwohl es ein erheblicher Vorteil für den Fahrer ist, dass trotz eines Betriebes der Antriebsmaschine mit nur zwei Phasen dem Fahrer gleichwohl eine Unterstützung durch eine Hilfskraft zur Verfügung gestellt wird, muss doch der Fahrer damit rechnen, dass bei einem Betrieb mit nur zwei Wicklungen der Antriebsmaschine in zeitlichen Phasen, abhängig von dem jeweiligen Lenkwinkel, von dem Motor Schüttelbewegungen und Rüttelbewegungen ausgehen, die sich am Lenkrad unangenehm bemerkbar machen. Es hat sich gezeigt, dass derartige Störungen sich stark dadurch vermindern lassen, dass die von der Antriebsmaschine abgegebene Leistung reduziert wird. Vorzugsweise wird daher durch die Diagnoseeinheit die zur Verfügung gestellte Leistung in angemessener Form zurückgenommen, um ein Optimum zwischen Unterstützung durch Hilfskraft und störungsfreier Lenkung zu ermöglichen.

Es hat sich gezeigt, dass unabhängig von der Tatsache, dass nur eine einzige Wicklung eines Motors nicht ordnungsgemäß arbeitet, die unterschiedlichen an dieser Wicklung möglichen Fehler sich auch in einer unterschiedlichen Art und Stärke der Rüttelbewegung äußern können. Vorzugsweise werden die einzelnen möglichen Fehler oder auch Gruppen dieser Fehler, soweit sie vergleichbare Reaktionen in dem Motor auslösen, einer bestimmten Fehlerklasse zugeordnet. Den einzelnen Fehlerklassen sind vorzugsweise wiederum bestimmte (prozentuale) Größen zugeordnet, um welchen die von dem Motor geforderte Leistung zurückgenommen wird.

In einer weiteren bevorzugten Ausführungsform reduziert die Diagnoseeinheit die zur Verfügung gestellte Leistung des Motors dadurch, dass das dem Drehmoment des Fahrerwunsches entsprechende Soll-Moment des Motors reduziert wird.

In einer weiteren bevorzugten Ausführungsform ist die Reduktion der Unterstützungsleistungen von der aktuellen Fahrsituation des gelenkten Fahrzeugs und/oder von der Art des Fehlers der fehlerhaften Wicklung abhängig.

Ist ein Fahrzeug beispielsweise mit hoher Geschwindigkeit auf der Autobahn unterwegs, so kann die unterstützende Leistung des Motors relativ weit zurückgenommen werden, da bei höheren Geschwindigkeit der Fahrer die Lenkung stärker spüren soll, um auch kleine Lenkwinkel exakt aussteuern zu können. Dagegen ist in der Regel, wegen der relativ geringen Fahrbahnanregungen, eine Rüttelbewegung des Lenkrades besonders unangenehm spürbar. Umgekehrt wird beim Fahren von engen Kurven mit geringer Geschwindigkeit eine größere Unterstützung durch den Servomotor begrüßt werden, wobei, wegen der in der Regel größeren Fahrbahnanregungen und der ohnedies heftigeren Bewegung des Lenkrades, dessen Schüttelbewegungen nicht so sehr ins Gewicht fallen.

In Weiterbildung der Erfindung kann der diagnostizierte Zustand des Motors in dem Fahrzeug gespeichert werden, so dass er während der Fahrt zur Verfügung steht und auch bei der Wartung des Fahrzeugs ausgelesen werden kann. Zusätzlich besteht die Möglichkeit den Fahrer durch akustische und/oder optische Signale über den Zustand des Motors zu informieren, wobei der Zustand, dass nur eine Wicklung des Motors fehlerhaft arbeitet als weniger schwerer Fehler gekennzeichnet wird, bei dessen Auftreten das Fahrzeug noch ohne weiteres bis zu einer geeigneten Werkstatt gefahren werden kann. Vielfach ergibt sich für ein Fahrzeug nach dem Ausschalten und erneuten Einschalten der Zündung eine vollkommen neue Fahrsituation. So kann beispielsweise der Fehler am Motor behoben worden sein. Vorzugsweise nach Ausschalten der Zündung und neuerlichem Einschalten der Zündung eine komplette Diagnose erneut vorgenommen wird. Unabhängig davon werden die gespeicherten Fehlerwerte und zugeordneten Zustände so lange beibehalten und bearbeitet bis sie durch neuere Werte ersetzt sind.

Die Ausführungen für die Vorrichtung gelten sinngemäß auch für das erfindungsgemäße Verfahren, so dass auf die vorangegangenen Ausführungen Bezug genommen wird.

Ausführungsbeispiele der Erfindung werden nachfolgend anhand der Zeichnung erläutert. Darin zeigen:
- Fig. 1: in skizzierter Form einen gebräuchlichen Aufbau eines Servo-Lenksystems (Stand der Technik),
- Fig. 2: das an sich bekannte Verfahren, bei Fehlern in einer oder mehreren Wicklungen des Antriebsmotors das Sternpunktrelais immer zu öffnen (Stand der Technik),
- Fig. 3: die Ergebnisse umfangreicher Messungen hinsichtlich der bei einer intakten Servolenkung, bei abgeschaltetem Motor und bei einer oder mehreren defekten Wicklungen durch die Lenkung aufzubringenden Drehmomente,
- Fig. 4: in symbolischer Darstellung die Anschaltung der Motorwicklungen an eine Leistungselektronik und weitere Fehlerfälle für eine Motorwicklung und
- Fig. 5: ein Ablaufdiagramm, welches die Arbeitsweise der Diagnoseeinheit beziehungsweise die Arbeitsweise des in der Diagnoseeinheit ablaufenden Verfahrens beschreibt.

In Fig. 2 sind in symbolischer Form die drei zu einem Stern geschalteten Wicklungen eines Drehstrom-Motors dargestellt. Durch gestrichelte Linien sind bei diesen Wicklungen Kurzschlüsse als Fehler dieser Wicklungen angedeutet, wobei sich diese Fehler einmal nur auf eine einzige Wicklung erstrecken und ein anderes Mal zwei Wicklungen betreffen. Gemäß dem Stand der Technik werden in beiden Fällen und selbstverständlich auch, wenn alle drei Wicklungen betroffen sind, die Kontakte eines gemeinsamen Sternpunktrelais gleichzeitig geöffnet, wodurch die Wicklungen stromlos werden und der Motor, abgesehen von seiner Trägheit und der ihm immanenten Reibung, wirkungslos wird. Zusammenfassend macht Fig. 2 die Aussage, dass bei einem Wicklungsfehler, auch wenn er nur eine einzige Wicklung des Motors betrifft, gemäß dem Stand der Technik die gesamte Servo- Unterstützung aufgehoben wird.

Fig. 3 zeigt Ergebnisse vielfacher Messungen, die belegen, dass für das Öffnen des Stempunktrelais, wenn nur eine einzige Wicklung des Motors fehlerhaft arbeitet, kein gravierender Grund besteht. Sowohl, wenn der Servo-Motor komplett durch das Sternpunktrelais abgeschaltet (40 Nm) wird, als auch für den schlimmsten Fall eines Fehlers bei einer einzigen Wicklung (43 Nm), ist von dem Fahrer immer reichlich dass Zehnfache an Drehmoment aufzubringen gegenüber einer korrekt arbeitenden Servo-Lenkung (3 Nm). Unter Berücksichtigung der Tatsache, dass durch Änderung der Phase und/oder Höhe der durch die beiden noch fehlerfreien Wicklungen fließenden Ströme sich aber eine merkbare Unterstützung für die Lenkung erreichen lässt, erscheint es es sinnvoll das Sternpunktrelais nicht zu öffnen, solange noch zwei intakte Wicklungen für den Motor vorhanden sind. Andererseits werden die bei mindestens zwei fehlerhaften Wicklungen möglichen und zur Lenkung notwendigen Drehmomente derart hoch (55 Nm bzw. 70 Nm), dass es geboten erscheint, in diesem Fall das Sternpunktrelais zu öffnen.

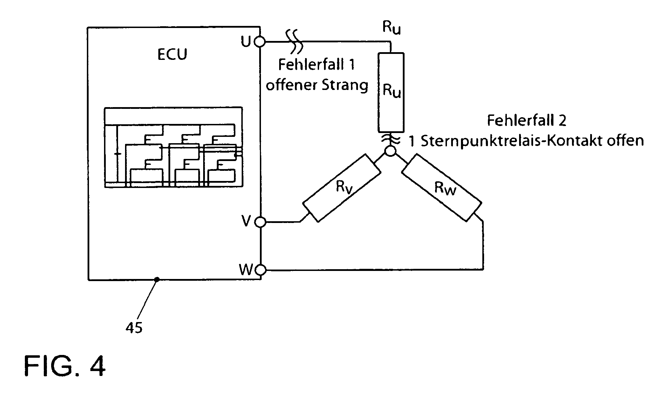

Fig. 4 zeigt ergänzend zu Fig. 2 weitere mögliche Fehler an einer Motorwicklung. Dabei zeigt Fig. 4 eine Ansteuerelektronik 45, über welche mittels Leistungstransistoren an den Anschlüssen U, V, W ein Drehstrom zur Verfügung gestellt wird, der aus der Fahrzeugbatterie als Gleichstromquelle durch geeignete Schaltungen gewonnen wird. Derartige Schaltungen sind an sich prinzipiell bekannt und sollen an dieser Stelle nicht näher erläutert werden. Mit den Anschlüssen U, V, W sollten drei Wicklungen Ru, Rv, Rw galvanisch verbunden sein. Fig. 4 zeigt nun als möglichen Fehler für eine Phase als Fehlerfall 1 eine Unterbrechung zwischen dem Anschluss U und der Wicklung Ru. Gleichzeitig ist in Fig. 4 noch ein Fehlerfall 2 angedeutet, bei dem die Verbindung des auf den Sternpunkt weisenden Endes der Wicklung Ru zu dem Sternpunkt hin unterbrochenen ist. Im Gegensatz zu den Kurzschlüssen nach Fig. 2 einer beziehungsweise zweier Wicklungen zeigt somit Fig. 4 weitere mögliche Fehler an einer Wicklung in Form von Unterbrechungen der Verbindungsleitungen. Bei all diesen Fehlern, soweit nur eine einzige Wicklung betroffen ist, wird erfindungsgemäß das Sternpunktrelais nicht aufgetrennt.

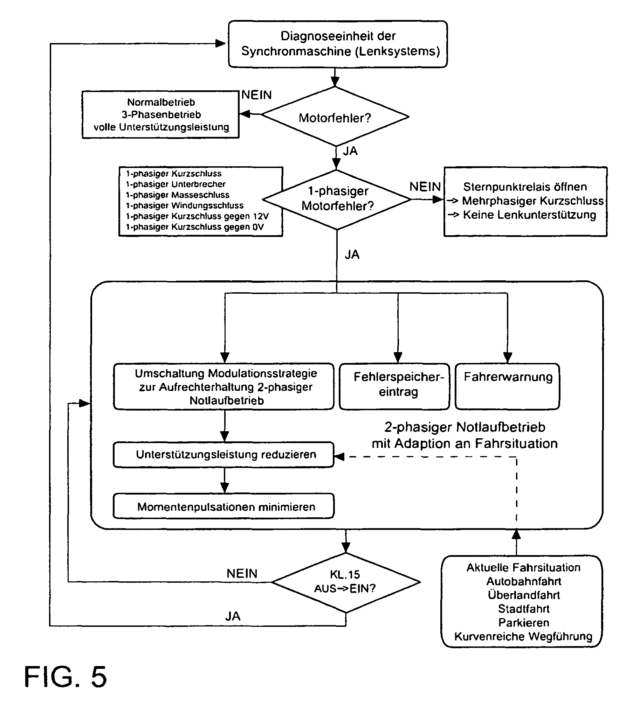

Fig. 5 zeigt schließlich anhand eines Ablaufdiagramms die in der erfindungsgemäßen Vorrichtung beziehungsweise dem erfindungsgemäßen Verfahren ablaufenden Schritte. Der Ablauf beginnt damit, dass die Diagnoseeinheit der Vorrichtung, insbesondere des Servo-Lenksystems den Drehstrom-Motor überprüft und eine Entscheidung dazu trifft, ob der Motor sich im Normalbetrieb befindet oder einen Fehler aufweist. Derartige Überprüfungen können beispielsweise prinzipiell so vorgenommen werden, dass die Zustände an den einzelnen Wicklungen miteinander verglichen werden und bei Abweichungen der entsprechende Fehler klassifiziert wird. Dabei kann diejenige Wicklung als fehlerhaft markiert werden, deren Messergebnisse hinsichtlich der Ergebnisse an den anderen beiden Wicklungen hinreichend abweichen. Findet die Diagnoseeinheit keinen Fehler, so ist die Diagnose beendet und wird dann in einem zeitlich geeigneten Abstand wiederholt. Wurde ein Motorfehler gefunden, so ist zu entscheiden ob es sich um einen nur eine einzige Wicklung betreffenden Fehler oder um einen mehrere Wicklungen betreffenden Fehler handelt. Ist entschieden worden, dass der Fehler mehrere Wicklungen und damit mehrere Phasen des Eingangstromes betrifft, so wird das Sternpunktrelais aufgetrennt und damit der Drehstrom-Motoren wirkungslos geschaltet.

Ist ein nur eine einzige Wicklung betreffender Fehler und damit ein einphasiger Motorfehler erkannt, so bleibt das Sternpunktrelais geschlossen und es wird in Abhängigkeit von dem jeweiligen einphasigen Fehler eine vorgegebene Modulationsstrategie der Ströme für die beiden intakt gebliebenen Motor-Wicklungen aufgeschaltet. Dies bildet einen so genannten zweiphasigen Notlaufbetrieb des Motors, der immerhin noch eine gewisse Servo-Leistung für die Lenkung zur Verfügung stellt. Gleichzeitig wird der gefundene Fehler in einen Speicher eingetragen und es können optische und/oder akustische Warnungen an den Fahrer herausgegeben werden, wobei diese Warnungen anzeigen, dass der Fahrer gefahrlos die nächste Werkstatt anfahren kann.

Während die bisher beschriebenen Schritte weitgehend für alle Vorrichtungen anwendbar sind, die die Abgabe einer Leistung durch einen Drehstrommotor benötigen, sind die folgenden Schritte besonders vorteilhaft für eine Servo-Lenkung eines Kraftfahrzeugs. Diese Schritte betreffen die Rücknahme der Unterstützungsleistungen des Servo-Motors, um die Momentpulsationen der Lenkung und damit auch des Lenkrades zu reduzieren beziehungsweise minimieren. Diese Reduzierung kann im einfachsten Fall durch eine vorgegebene Rücknahme der Leistung unabhängig von der aktuellen Fahrsituation sein. Vorzugsweise wird diese Reduzierung aber in Abhängigkeit von der jeweiligen Fahrsituation des Fahrzeugs vorgenommen werden Dabei kann also der Umfang der Unterstützung sich während des Fahrbetriebes je nach Fahrsituation mehrmals ändern.

Sind die genannten Schritte alle durchlaufen geschieht noch eine Abfrage, ob der Strom an der Klemme 15 aus- oder eingeschaltet ist. Klemme 15 betrifft auch den Zustand der Zündung, das heißt ob mithilfe des Zündschlüssels die Zündung noch eingeschaltet oder schon ausgeschaltet ist. Ist die Zündung noch eingeschaltet, so wird die Unterstützungsleistung nur abhängig von der Fahrsituation geändert. Ist aber die Zündung inzwischen ausgeschaltet worden und wieder eingeschaltet worden, so kann sich der Fehler des Motors inzwischen geändert haben, weil beispielsweise Kurzschlüsse infolge verdunsteter Flüssigkeit nicht mehr bestehen oder der Motor repariert wurde. Somit wird nach wieder eingeschalteter Zündung die gesamte Diagnose durch die Diagnoseeinheit komplett neu durchgeführt.

Zusammenfassend lässt sich die Erfindung kurz wie folgt beschreiben. Die Erfindung geht davon aus, dass bei elektromechanischen Lenksystemen mit Synchronmotor (siehe Fig. 2) im Rahmen des Sicherheitskonzeptes ein Sternpunktrelais zur Vermeidung von Lenksystemblockieren bei Motorkurzschlüssen eingesetzt wird. Die Wirkungsweise des Sternpunktrelais besteht darin, dass bei erkanntem Fehler im elektrischen Kreis des Synchronmotors das Sternpunktrelais geöffnet wird, um hohe Bremsmomente des permanenterregten Synchronmotors zu vermeiden. Während eines Kurzschlusses verursachen die Kurzschlussströme ein hohes Bremsmoment wodurch ein Lenkungsblockierer entstehen kann. Dabei entspricht das Blockiermoment der Lenkgeschwindigkeit. Die in Fig. 2 geschilderte Vorgehensweise zur Auftrennung der Motorphasen im Fehlerfall verhindert hohe Bremsmomente, die im Extremfall das Fahrzeug unbeherrschbar machen. Die Praxis zeigt jedoch, dass nicht beherrschbare Bremsmomente lediglich bei 3-phasigen oder 2-phasigen Fehlern beziehungsweise Kurzschlüssen auftreten können.

Ziel der Erfindung ist es, bei durch die Diagnoseeinheit des Lenksystems erkanntem 1-phasigen Kurzschluss oder Phasenunterbrechung (im Beispiel von Fig. 4 Phase U) der Synchronmaschine einen Notlaufbetrieb mit reduzierter Unterstützungsleistung aufrecht zu erhalten. Das bedeutet, dass die verbleibenden 2 "fehlerfreien" Phasen (im Beispiel von Fig. 4 Phase W und V) des Synchronmotors mit einer geeigneten Modulationsstrategie auch im Fehlerfall bestromt werden. Die Modulationsstrategie wird dabei an die jeweilige Fehlerart angepasst. Eine Auftrennung des Sternpunktrelais findet in diesem Fehlerfall nicht statt. So wird gewährleistet dass eine Momentenabgabe zur Lenkkraftunterstützung erhalten bleibt und das Lenksystem ein Maximum an Verfügbarkeit (Lenkunterstützungsbereitschaft) gewährleistet

## Patentansprüche

1. Vorrichtung zum Betrieb einer technischen Einrichtung, mit einer elektrischen Antriebsmaschine (9), die mindestens drei Wicklungen (Ru, Rv, Rw) aufweist, welche zur Bereitstellung eines Drehmoments mit einem Strom beaufschlagbar sind, wobei der Strom unterschiedliche Strom-Phasen für die Wicklungen (Ru, Rv, Rw) aufweist, die den Wicklungen (Ru, Rv, Rw) zur Erzeugung eines Drehfeldes jeweils zuordenbar sind, und eine Steuereinheit (12) zur Ansteuerung der elektrischen Antriebsmaschine (9), wobei die Wicklungen (Ru, Rv, Rw) zueinander sternförmig angeordnet sind und die dem Sternpunkt zugeordneten Enden der Wicklungen (Ru, Rv, Rw) über ein Sternpunktrelais miteinander verbunden sind, **dadurch gekennzeichnet,**
**dass** eine Diagnoseeinheit mit den Wicklungen (Ru, Rv, Rw) verbunden ist, die die elektrische Antriebsmaschine (9) und/oder die Steuereinheit (12) daraufhin überwacht, dass mindestens zwei der Wicklungen (Rv, Rw) der Antriebsmaschine fehlerfrei arbeiten und die nach der Feststellung von weniger als zwei fehlerfrei arbeitenden Wicklungen (Rv, Rw) das Sternpunktrelais auftrennt.

2. Vorrichtung nach Anspruch 1, **dadurch gekennzeichnet,**
**dass** die Diagnoseeinheit nach Feststellung von noch mindestens zwei fehlerfrei arbeitenden Wicklungen (Ru, Rv, Rw) und mindestens einer fehlerhaften Wicklung die Höhe und/oder die Phase der den fehlerfreien Wicklungen zugeführten Ströme derart anpasst, dass diese bei geschlossenem Sternpunktrelais über die Arbeitsmaschine (9) eine optimale Leistung zur Verfügung stellen.

3. Vorrichtung nach einem der vorangegangenen Ansprüche, **dadurch gekennzeichnet,**
**dass** die Diagnoseeinheit bei Feststellung von zwei ordnungsgemäß arbeitenden Wicklungen (Ru, Rv, Rw) den Fehler der fehlerhaften Wicklung klassifiziert und in Abhängigkeit von der Klassifizierung des Fehlers die Höhe und/oder die Phase der Ströme für die fehlerfrei arbeitenden Wicklungen ändert.

4. Vorrichtung nach Anspruch 3, **dadurch gekennzeichnet, dass** durch die Diagnoseeinheit eine fehlerhafte Wicklung daraufhin klassifiziert wird, ob sie einen einphasigen Motorphasenkurzschluss, eine Unterbrechung der Motorphase, einen Wicklungskurzschluss innerhalb der Motorphase, einen einphasigen Masseschluss, einen einphasigen Kurzschluss gegen die Versorgungsspannung oder einen offenen Kontakt zum Sternpunktrelais besitzt.

5. Vorrichtung nach einem der vorangegangenen Ansprüche, **dadurch gekennzeichnet,**
**dass** die technische Einrichtung eine elektromechanische Servolenkung ist.

6. Vorrichtung nach einem der vorangegangenen Ansprüche, **dadurch gekennzeichnet, dass** die Diagnoseeinheit bei Feststellung von nur noch zwei fehlerfrei arbeitenden Wicklungen (Ru, Rv, Rw) die von dem Motor (9) zur Verfügung gestellte Leistung reduziert.

7. Vorrichtung nach Anspruch 6, **dadurch gekennzeichnet, dass** die Diagnoseeinheit die von dem Motor (9) zur Verfügung gestellte Leistung in Abhängigkeit von der Klassifikation des Fehlers der fehlerhaften Wicklung (Ru, Rv, Rw) reduziert.

8. Vorrichtung nach einem der Ansprüche 6 oder 7, **dadurch gekennzeichnet, dass** die Diagnoseeinheit die zur Verfügung gestellte Leistung des Motors (9) dadurch reduziert, dass das dem Drehmoment (5) des Fahrerwunsches entsprechende Soll-Moment (S) des Motors (9) reduziert wird.

9. Vorrichtung nach einem der Ansprüche 6 bis 8, **dadurch gekennzeichnet, dass** die Reduktion der Unterstützungsleistungen von der aktuellen Fahrsituation des gelenkten Fahrzeugs und/oder von der Art des Fehlers der fehlerhaften Wicklung (Ru, Rv, Rw) abhängig ist.

10. Vorrichtung nach einem der vorangegangenen Ansprüche, **dadurch gekennzeichnet,**
**dass** die Diagnoseeinheit nach der Ausschaltung und erneuten Einschaltung der Zündung des Fahrzeugs eine erneute Diagnose der Wicklungen des Motors vornimmt.

11. Verfahren zum Betrieb einer technischen Einrichtung, mit einer elektrischen Antriebsmaschine (9), die mindestens drei Wicklungen (Ru, Rv, Rw) aufweist, welche zur Bereitstellung eines Drehmoments mit einem Strom beaufschlagbar sind, wobei der Strom regelmäßig drei unterschiedliche Strom-Phasen aufweist, die den Wicklungen (Ru, Rv, Rw) zur Erzeugung eines Drehfeldes jeweils zuordenbar sind, und eine Steuereinheit (12) zur Ansteuerung der elektrischen Antriebsmaschine (9), wobei die Wicklungen (Ru, Rv, Rw) zueinander sternförmig angeordnet sind und die dem Sternpunkt zugeordneten Enden der Wicklungen (Ru, Rv, Rw) über ein Sternpunktrelais miteinander verbunden sind, **dadurch gekennzeichnet,**
**dass** eine Diagnoseeinheit mit den Wicklungen (Ru, Rv, Rw) verbunden ist, die die elektrische Antriebsmaschine (9) und/oder die Steuereinheit (12) daraufhin überwacht, dass mindestens zwei der Wicklungen (Rv, Rw) der Antriebsmaschine fehlerfrei arbeiten und die nach der Feststellung von weniger als zwei fehlerfrei arbeitenden Wicklungen (Rv, Rw) das Sternpunktrelais auftrennt.

## Claims

1. Apparatus for operating a technical device, having an electrical drive machine (9) which has at least three windings (Ru, Rv, Rw) to which a current can be applied in order to provide a torque, with the current having different current phases for the windings (Ru, Rv, Rw), it being possible to in each case allocate the said current phases to the windings (Ru, Rv, Rw) in order to generate a rotary field, and a control unit (12) for driving the electrical drive machine (9), with the windings (Ru, Rv, Rw) being arranged in the form of a star in relation to one another and those ends of the windings (Ru, Rv, Rw) which are associated with the star point being connected to one another by means of a star-point relay, **characterized in that** a diagnosis unit is connected to the windings (Ru, Rv, Rw), the said diagnosis unit monitoring the electrical drive machine (9) and/or the control unit (12) in respect of whether at least two of the windings (Rv, Rw) of the drive machine are operating without fault and the said diagnosis unit disconnecting the star-point relay once fewer than two windings (Rv, Rw) operating without fault are identified.

2. Apparatus according to Claim 1, **characterized in that**, once at least two windings (Ru, Rv, Rw) still operating without fault and at least one faulty winding are identified, the diagnosis unit adjusts the level and/or the phase of the currents which are supplied to the fault-free windings in such a way that the said windings provide an optimum power by means of the operating machine (9) when the star-point relay is closed.

3. Apparatus according to either of the preceding claims, **characterized in that**, when two correctly operating windings (Ru, Rv, Rw) are identified, the diagnosis unit classifies the fault in the faulty winding and changes the level and/or phase of the current for the windings operating without fault depending on the classification of the fault.

4. Apparatus according to Claim 3, **characterized in that** the diagnosis unit classifies a faulty winding in respect of whether it has a single-phase motor phase short circuit, an interruption in the motor phase, a winding short circuit within the motor phase, a single-phase ground fault, a single-phase short circuit in relation to the supply voltage or an open contact to the star-point relay.

5. Apparatus according to one of the preceding claims, **characterized in that** the technical device is an electromechanical power-steering system.

6. Apparatus according to one of the preceding claims, **characterized in that**, when only two windings (Ru, Rv, Rw) operating without fault are identified, the diagnosis unit reduces the power provided by the motor (9).

7. Apparatus according to Claim 6, **characterized in that** the diagnosis unit reduces the power which is provided by the motor (9) depending on the classification of the fault in the faulty winding (Ru, Rv, Rw).

8. Apparatus according to either of Claims 6 and 7, **characterized in that** the diagnosis unit reduces the power which is provided by the motor (9) by reducing the setpoint torque (S) of the motor (9) which corresponds to the torque (5) requested by the driver.

9. Apparatus according to one of Claims 6 to 8, **characterized in that** the reduction in the assistance powers is dependent on the current driving situation of the steered vehicle and/or on the type of fault in the faulty winding (Ru, Rv, Rw).

10. Apparatus according to one of the preceding claims, **characterized in that**, after the ignition system of the vehicle is switched off and switched on again, the diagnosis unit again performs diagnosis of the windings of the motor.

11. Method for operating a technical device, having an electrical drive machine (9) which has at least three windings (Ru, Rv, Rw) to which a current can be applied in order to provide a torque, with the current generally having three different current phases which can in each case be allocated to the windings (Ru, Rv, Rw) in order to generate a rotary field, and a control unit (12) for driving the electrical drive machine (9), with the windings (Ru, Rv, Rw) being arranged in the form of a star in relation to one another and those ends of the windings (Ru, Rv, Rw) which are associated with the star point being connected to one another by means of a star-point relay, **characterized in that** a diagnosis unit is connected to the windings (Ru, Rv, Rw), the said diagnosis unit monitoring the electrical drive machine (9) and/or the control unit (12) to check that at least two of the windings (Rv, Rw) of the drive machine are operating without fault and the said diagnosis unit disconnecting the star-point relay once fewer than two windings (Rv, Rw) operating without fault are identified.

## Revendications

1. Ensemble de conduite d'un dispositif technique qui comporte une machine électrique d'entraînement (9) dotée
d'au moins trois bobinages (Ru, Rv, Rw) sur lesquels un courant peut être appliqué en vue de produire un couple de rotation,
le courant pour les bobinages (Ru, Rv, Rw) comportant différentes phases qui peuvent être associées aux bobinages (Ru, Rv, Rw) respectifs en vue de former un champ tournant, et
d'une unité de commande (12) qui commande la machine électrique d'entraînement (9),
les bobinages (Ru, Rv, Rw) étant disposés les uns par rapport aux autres en étoile et les extrémités des bobinages (Ru, Rv, Rw) associées au point central de l'étoile étant reliées les unes aux autres par l'intermédiaire d'un relais de point central d'étoile, **caractérisé en ce que**
une unité de diagnostic qui surveille la machine électrique d'entraînement (9) et/ou l'unité de commande (12) pour vérifier si au moins deux des bobinages (Rv, Rw) de la machine d'entraînement travaillent sans défaut est reliée aux bobinages (Ru, Rv, Rw) et coupe le relais du point central de l'étoile lorsqu'elle constate que moins de deux bobinages (Rv, Rw) travaillent sans défaut.

2. Système selon la revendication 1, **caractérisé en ce qu'**après avoir constaté qu'au moins deux bobinages (Ru, Rv, Rw) fonctionnent encore sans défaut, l'unité de diagnostic adapte le niveau et/ou la phase des courants apportés aux bobinages fonctionnant sans défaut de telle sorte que lorsque le relais du point central de l'étoile est fermé, une puissance optimale soit délivrée à la machine de travail (9).

3. Système selon l'une des revendications précédentes, **caractérisé en ce que** lorsqu'elle constate que deux bobinages (Ru, Rv, Rw) fonctionnent correctement, l'unité de diagnostic classe le défaut du bobinage défectueux et modifie le niveau et/ou la phase des courants destinés aux bobinages travaillant sans défaut en fonction du classement du défaut.

4. Système selon la revendication 3, **caractérisé en ce qu'**un bobinage défectueux est classé par l'unité de diagnostic selon qu'il présente un court-circuit sur une phase du moteur, une interruption de la phase du monteur, un court-circuit du bobinage à l'intérieur de la phase du moteur, un raccordement d'une phase à la masse, un court-circuit d'une phase par rapport à la tension d'alimentation ou l'ouverture d'un contact avec le relais du point central de l'étoile.

5. Système selon l'une des revendications précédentes, **caractérisé en ce que** le dispositif technique est une servodirection électromécanique.

6. Système selon l'une des revendications précédentes, **caractérisé en ce que** lorsqu'elle constate que seuls deux bobinages (Ru, Rv, Rw) fonctionnent encore sans défaut, l'unité de diagnostic réduit la puissance délivrée au moteur (9).

7. Système selon la revendication 6, **caractérisé en ce que** l'unité de diagnostic réduit la puissance délivrée au moteur (9) en fonction du classement du défaut du bobinage (Ru, Rv, Rw) défectueux.

8. Système selon l'une des revendications 6 ou 7, **caractérisé en ce que** l'unité de diagnostic réduit la puissance délivrée au moteur (9) en réduisant le couple de consigne (S) du moteur (9) qui correspond au couple de rotation (5) souhaité par le conducteur.

9. Système selon l'une des revendications 6 à 8, **caractérisé en ce que** la réduction de la puissance de soutien dépend de la situation de roulage en cours du véhicule dirigé et/ou de la nature de l'erreur du bobinage (Ru, Rv, Rw) défectueux.

10. Système selon l'une des revendications précédentes, **caractérisé en ce que** l'unité de diagnostic effectue un nouveau diagnostic des bobinages du moteur après débranchement et re-branchement de l'allumage du véhicule.

11. Procédé de conduite d'un dispositif technique qui comporte une machine électrique d'entraînement (9) dotée
d'au moins trois bobinages (Ru, Rv, Rw) sur lesquels un courant peut être appliqué en vue de produire un couple de rotation,
le courant pour les bobinages (Ru, Rv, Rw) comportant normalement trois phases différentes qui peuvent être associées aux bobinages (Ru, Rv, Rw) respectifs en vue de former un champ tournant, et
d'une unité de commande (12) qui commande la machine électrique d'entraînement (9),
les bobinages (Ru, Rv, Rw) étant disposés les uns par rapport aux autres en étoile et les extrémités des bobinages (Ru, Rv, Rw) associées au point central de l'étoile étant reliées les unes aux autres par l'intermédiaire d'un relais de point central d'étoile, **caractérisé en ce que**
une unité de diagnostic qui surveille la machine électrique d'entraînement (9) et/ou l'unité de commande (12) pour vérifier si au moins deux des bobinages (Rv, Rw) de la machine d'entraînement travaillent sans défaut est reliée aux bobinages (Ru, Rv, Rw) et coupe le relais du point central de l'étoile lorsqu'elle constate que moins de deux bobinages (Rv, Rw) travaillent sans défaut.
